# EUROPÄISCHE PATENTANMELDUNG

(11) **EP 0 776 843 A1**
(43) Veröffentlichungstag der Anmeldung: **04.06.1997**
(21) Anmeldenummer: 95119701.1
(22) Anmeldetag: 14.12.1995
(51) Int. Cl.: B65G 53/48, B65G 53/46

(54) **Förderaggregat, Betriebsverfahren hierfür sowie deren Verwendungen**

(71) Anmelder: Sika Equipment AG, 8967 Widen (CH)
(72) Erfinder: Egli, Ernst, CH-8951 Fahrweid (CH); Gasser, Peter, CH-5523 Nesselnbach (CH)
(74) Vertreter: Troesch Scheidegger Werner AG

(57) **Zusammenfassung**

Um an einem Förderaggregat, welches zwischen einer Fülleinrichtung (4) und einem druckluftbeaufschlagten Förderleitungsabschnitt (16) einen Rotationsförderer (1a) aufweist, woran die Druckdifferenz zwischen Druck an der Fülleinrichtung (4) und wesentlich höherem Druck in der Förderleitung (16) vorgesehen ist, eine exakte und betriebssichere Dosierung der ausgegebenen Mediumsmenge (ṁ) zu gewährleisten, wird die Funktion der Druckstufe mit dem Rotationsförderer (1a) realisiert, die Funktion der Fördermengenvorgabe und Dosierung mit einem weiteren vorgesehenen mechanischen Förderer (24) zwischengeschaltet zwischen Fülleinrichtung (4) und Rotationsfördereinrichtung (1a).

## Beschreibung

Die vorliegende Erfindung betrifft ein Förderaggregat, welches insbesondere aufgrund bei der Pulverförderung entstehender Probleme entwickelt wurde, im Resultat aber auch für andere zu fördernde Medien eingesetzt werden kann.

Deshalb wird nachfolgend von Problemen bei der pneumatischen Förderung von Pulver ausgegangen, die diese Probleme lösende Technik ist aber, wie erwähnt, auch für andere Medien wie z.B. und insbesondere für Suspensionen mit grobkörnigem Feststoffanteil anwendbar wie insbesondere für Beton.

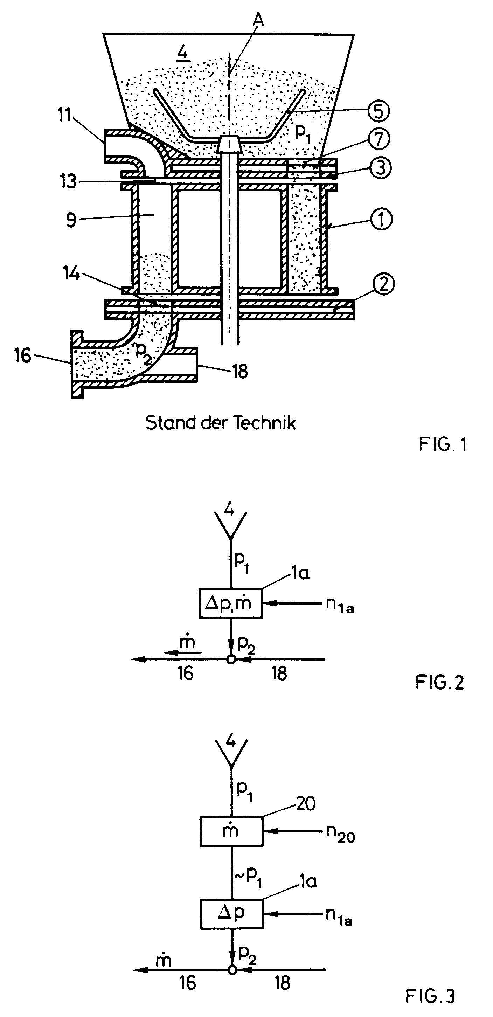

Bis anhin war es üblich, bei der pneumatischen Förderung von Beton, Förderaggregate, ausgebildet nach dem Oberbegriff von Anspruch 1, lediglich mit einer Rotationsdruckstufen-Einrichtung zwischen Fülleinrichtung und Förderleitungsabschnitt zu versehen. Sie diente dazu, die Druck-Entkopplung sicherzustellen, gleichzeitig gab ihr Betrieb die Förderleistung vor. Dabei wurden primär als Rotationsdruckstufen-Einrichtungen Rotoreinrichtungen eingesetzt, welche wie anhand von Fig. 1 dargestellt aufgebaut sind.

Ein Rotor 1 läuft, drehgetrieben, zwischen zwei stirnseitigen Dichtplatten 2 bzw. 3. Die Fülleinrichtung 4 mit Rührwerk 5 kommuniziert mit einer Einlassöffnung 7 in der einen Dichtplatte 3, welche Einlassöffnung 7 ausgerichtet ist auf die Bewegungsbahn der beidseitig offenen Büchsen 9, die im Peripheriebereich des Rotors 1, parallel zu deren Achse A, angeordnet sind.

Eine Druckluftleitung 11 kommuniziert mit einer weiteren Oeffnung 13 in der Dichtplatte 3, welche Druckluftöffnung 13 ebenfalls auf die Bewegungsbahn der Büchsen 9 ausgerichtet ist.

In der Dichtplatte 2, ausgerichtet auf die Druckluftöffnung 13 und damit ebenfalls auf die Bewegungsbahn der Büchse 9, ist eine Auslassöffnung 14 vorgesehen, sodass durch Druckluftbeaufschlagung der Oeffnung 13 zu förderndes Medium aus der jeweils mit den Oeffnungen 13 und 14 ausgerichteten Büchse 9 ausgeschossen werden kann.

Ausgangsseits der Rotoreinrichtung ist eine Förder-Druckluftleitung 16 vorgesehen, welche durch Leitung 18 Druckluft beaufschlagt wird, sodass sich ausgangsseitig der Rotoreinrichtung ein wesentlich höherer statischer Druck p₂ einstellt als an der Einfülleinrichtung p₁, wo üblicherweise Atmosphärendruck herrscht.

Gleichermassen wie eine gegebenenfalls auch einsetzbare Zellradschleuse wirkt die anhand von Fig. 1 beschriebene und bekannte Rotoreinrichtung als Druckstufe. Es werden der hohe ausgangsseitige Förderdruck p₂ vom wesentlich tieferen Fülldruck p₁ entkoppelt.

In Fig. 2 ist, schematisch, das bekannte Förderaggregat dargestellt.
Bei diesem Förderaggregat entstehen Probleme an der Rotationsdruckstufen-Einrichtung, insbesondere wenn die Fördermenge ṁ dosiert werden soll, was, wie ohne weiteres ersichtlich, durch Verstellen der Rotationsdrehzahl n an der erwähnten Einrichtung vorgenommen werden kann.

Die vorliegende Erfindung setzt sich zum Ziel, solche Probleme am Förderaggregat eingangserwähnter Art zu lösen. Dies wird bei dessen Ausbildung nach dem Kennzeichen von Anspruch 1 erreicht.

Wie in Fig. 3 prinzipiell dargestellt ist, wird dabei von der Erkenntnis ausgegangen, dass durch Trennung der Funktionen Vorgabe der Fördermenge ṁ/Druck-Entkopplung Δp ein wesentlich störungsunanfälligerer Förderaggregatbetrieb möglich wird und insbesondere eine hohe Reproduzierbarkeit und Genauigkeit der Vorgabe Pro Zeiteinheit ausgegebener Menge ṁ des zu fördernden Mediums, der Dosierung.
Eine detailliertere Beschreibung von Fig. 3 erfolgt im Zusammenhang mit der Figurendetailbeschreibung.

Obwohl gemäss Wortlaut von Anspruch 2 die in Fig. 2 und 3 generell mit 1a bezeichnete Rotationsförder- und Druckstufen-Einrichtung durchaus, je nach zu förderndem Medium, als Zahnradpumpe ausgebildet sein kann, wird vorzugsweise eine Zellradschleuse eingesetzt oder, und dies besonders vorzugsweise, eine Rotoreinrichtung der in Fig. 1 dargestellten Art.

Die in Fig. 3 mit 20 bezeichnete und erfindungsgemäss eingesetzte, steuerbare mechanische Fördereinrichtung kann je nach zu förderndem Medium ebenfalls als Zahnradpumpe oder Zellradschleuse realisiert werden, wird aber insbesondere für die Förderung abrasiver Pulver oder Suspensionen vorzugsweise als Förderschneckenanordnung realisiert.

Generell im Rahmen der vorliegenden Erfindung ist wesentlich, dass die Fördermengensteuerung und die Druckentkopplung an separaten Aggregaten vorgenommen werden. Welcher Art diese Aggregate sind, bemisst sich weitgehendst nach der Art des zu fördernden Mediums. Insbesondere für die Förderung abrasiver Media, seien dies Pulver oder Suspensionen wie beispielsweise und insbesondere Beton, wird dem Einsatz einer Förderschneckenanordnung als Einheit 20 und dem Einsatz einer Rotationseinrichtung gemäss Fig. 1, für die Druckentkopplung, gemäss Einheit 1a, der Vorzug gegeben.

Betrieben wird das vorerwähnte Förderaggregat dem Wortlaut von Anspruch 4 folgend dadurch, dass die Menge ṁ pro Zeiteinheit ausgegebenen, zu fördernden Mediums durch Steuerung des Betriebes der steuerbaren mechanischen Fördereinrichtung 20 gestellt wird. Eine bevorzugte Verwendung des beschriebenen Förderaggregates bzw. seines Betriebsverfahrens besteht in der Zudosierung pulverförmiger Media in den Strom eines auszuspritzenden Spritzmediums insbesondere von Spritzbeton oder eines Spritzmediums für die Folienauskleidung von Bauwerken, wie z.B. von Tunnels.

Dem Wortlaut von Anspruch 6 folgend kann aber in einer weiteren bevorzugten Verwendung das beschriebene Förderaggregat auch direkt für die Förderung von Zementpulver oder von Beton eingesetzt werden, letzteres insbesondere unter Einsatz einer Förderschneckenanordnung als mechanische Fördereinrichtung 20.

Im weiteren und dem Wortlaut von Anspruch 7 folgend, besteht eine bevorzugte Verwendung des erwähnten Förderaggregates oder des erwähnten Verfahrens darin, in einen Regelkreis für die Zusammensetzung eines mehrkomponentigen Mediums insbesondere Spritzmediums als Stellverfahren beziehungsweise Stellglied eingesetzt zu werden. Dies deshalb, weil durch die vorerwähnte erfindungsgemässe Funktionstrennung eine hochgenaue Dosierungssteuerung möglich wird.

Dem Wortlaut von Anspruch 8 folgend besteht eine besonders bevorzugte Verwendung des erwähnten Förderaggregates beziehungsweise Verfahrens in der Zudosierung eines pulverförmigen Mediums in den Strom eines für die Auskleidung von Bauwerken ausgespritzten, folienbildenden Mediums.

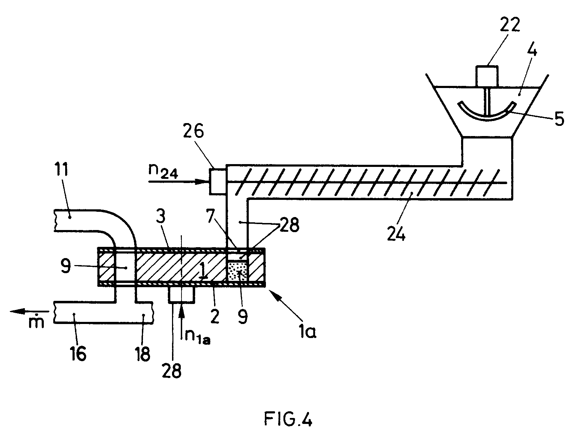

Die Erfindung wird anschliessend anhand von Fig. 3 und 4 beispielsweise erläutert. Es zeigen:
- Fig. 1: eine vorbekannte Rotorfördereinrichtung,
- Fig. 2: schematisch in Form eines Signalfluss-/Funktionsblockdiagrammes das Prinzip, wonach vorbekannte Förderaggregate der angesprochenen Art arbeiten,
- Fig. 3: ausgehend von der Darstellung von Fig. 2, anhand eines Signalfluss-/Funktionsblockdiagrammes, das Prinzip, wonach das erfindungsgemässe Förderaggregat arbeitet,
- Fig. 4: schematisch den Aufbau eines erfindungsgemässen Förderaggregates, insbesondere ausgelegt für die Förderung abrasiver Pulver beziehungsweise von grobkörnigen Suspensionen wie von Beton.

Auf Fig. 3 zurückkommend, woran die selben Bezugszeichen verwendet wurden wie an der bereits vorbeschriebenen Fig. 2, ist erkenntlich, dass erfindungsgemäss eine zusätzliche, steuerbare mechanische Fördereinrichtung 20 zwischen Fülleinrichtung 4 und Rotationsförder- und Druckstufen-Einrichtung 1a vorgesehen wird. Bei der erfindungsgemäss vorgesehenen Fördereinrichtung 20 handelt es sich um einen Rotationsförderer, dabei vorzugsweise um eine Zellradschleuse oder eine Zahnradpumpe, jedoch besonders vorzugsweise, insbesondere für abrasive Pulver beziehungsweise grobkörnige Suspensionen wie Beton, um einen Schneckenförderer. Die Dosierung wird durch Einstellung der Drehzahl n₂₀ an der mechanischen Fördereinrichtung 20 eingestellt, während die Druckstufe bzw. Druckentkopplung an der weiterhin vorgesehenen Druckstufen-Einrichtung 1a realisiert wird, die vorzugsweise mit konstanter, vorgegebener Drehzahl n₁ₐ betrieben wird.

Gemäss Fig. 4, worin die bereits beschriebenen Teile mit den selben Bezugszeichen bezeichnet sind, ist an der Einfülleinrichtung 4 das Rührwerk 5 bevorzugterweise oben gelagert und von einem oben gelagerten Antrieb 22 angetrieben. Anstelle von oder zusätzlich zu einem Rührwerk kann auch ein Vibrator vorgesehen werden (nicht dargestellt). Die Fülleinrichtung 4, in Form eines Fülltrichters, mündet in die Einlassöffnung eines Schneckenförderers 24 ein, welcher über sein Antriebsaggregat 26 mit der Betriebsdrehzahl n₂₄ angetrieben wird. Ueber einen vorzugsweise vertikal angeordneten Auslassstutzen 28 mündet der Ausgang des Schneckenförderers 24 in die Einlassöffnung 7 der Rotoreinrichtung gemäss Fig. 1, welche mit der Drehzahl n₁ₐ ihres Antriebs 28 angetrieben wird. Das Verhältnis der Betriebsdrehzahlen n₂₄ und n₁ₐ wird so gewählt, dass die Büchsen 9 in Einfüllposition nur bei zu erreichender maximaler Fördermenge m gefüllt werden. Bevorzugterweise und wie dargestellt bei 28, werden die Büchsen 9 des Rotors 1 jeweils nur teilweise gefüllt, was durch entsprechende Einstellung der Förderung am Schneckenförderer 24 mit seiner Drehzahl n₂₄ mit Bezug auf die vorzugsweise konstant gehaltene Drehzahl n₁ₐ des Rotors 1 erreicht wird. Dadurch wird auch erreicht, dass im Stutzen 28 sich kein zu förderndes Medium anlagert und Anlass zur Brückenbildung und Verstopfungen im Stutzen 28 selber und im Bereich der Einfüllöffnung 7 geben kann. Kontinuierlich wird das durch den Schneckenförderer 24 ausgegebene Medium, im dargestellten Fall insbesondere pulverförmiges, abrasives Medium oder eine grobkörnige Suspension wie Beton durch die Rotoreinrichtung 1a weggefördert.

## Patentansprüche

1. Förderaggregat umfassend:
- eine unter einem ersten Druck (p₁) stehende Fülleinrichtung (4) für das zu fördernde Medium,
- einen mit einem zweiten Druck (p₂) beaufschlagte Förderleitungsabschnitt (16), wobei der zweite Druck (p₂) wesentlich höher ist als der erste,
- eine Rotationsförder- und Druckstufen-Einrichtung (1a) zwischen Fülleinrichtung (4) und Förderleitungsabschnitt (16), worüber das zu fördernde Medium über die Druckdifferenz (Δp) zwischen erstem (p₁) und zweitem (p₂) Druck gefördert wird,
dadurch gekennzeichnet, dass der Rotationsförder- und Druckstufen-Einrichtung (1a) und der Fülleinrichtung (4) eine steuerbare mechanische Fördereinrichtung (20) zwischengeschaltet ist.

2. Förderaggregat nach Anspruch 1, dadurch gekennzeichnet, dass die Rotationsförder- und Druckstufen-Einrichtung gebildet ist durch eine Zahnradpumpe, eine Zellradschleuse oder, und vorzugsweise durch eine Rotoreinrichtung (1a) mit einem Rotor (1), mit mehreren rotorachs-parallel angeordneten, beidseitig offenen Aufnahmebüchsen (9), die Rotorstirnseiten abschliessenden Dichtungsplatten (3,2), mit einer darin auf die Rotationsbahn der Büchsen (9) ausgerichteten, mit dem Ausgang der Fülleinrichtung (4) verbundenen Füllöffnung (7), einer auf die Rotationsbahn der Büchsen (9) ausgerichteten Drucköffnung (13) sowie einer sowohl auf die Rotationsbahn wie auch auf die Drucköffnung (13) ausgerichteten, ihr gegenüberliegenden, Ausgabeöffnung (14).

3. Förderaggregat nach einem der Ansprüche 1 oder 2, dadurch gekennzeichnet, dass die steuerbare mechanische Fördereinrichtung (20) gebildet ist durch eine Zahnradpumpe, eine Zellradschleuse oder, und vorzugsweise auch eine Förderschneckenanordnung (24).

4. Verfahren zum Betrieb eines Förderaggregates nach einem der Ansprüche 1-4, dadurch gekennzeichnet, dass die Menge (ṁ) pro Zeiteinheit ausgegebenen zu fördernden Mediums durch Steuerung des Betriebes (n₂₀, n₂₄) der steuerbaren mechanischen Fördereinrichtung (20,24) gestellt wird.

5. Verwendung des Förderaggregates nach einem der Ansprüche 1-3 und/oder des Verfahrens nach Anspruch 4 für die Zudosierung eines pulverförmigen Mediums in den Strom eines auszuspritzenden Spritzmediums.

6. Verwendung des Förderaggregates nach einem der Ansprüche 1-3 und/oder des Verfahrens nach Anspruch 4 für die Förderung von Zement oder Beton.

7. Verwendung des Förderaggregates nach einem der Ansprüche 1-3 und/oder des Verfahrens nach Anspruch 4 als Stellverfahren oder Stellglied beziehungsweise Messverfahren oder Messglied, bei der Regelung der Zusammensetzung eines mehrkomponentigen Mediums, insbesondere Spritzmediums.

8. Verwendung des Förderaggregates nach einem der Ansprüche 1-3 und/oder des Verfahrens nach Anspruch 4 für die Zudosierung eines pulverförmigen Mediums in den Strom eines für die Auskleidung von Bauwerken ausgespritzten, folienbildenden Mediums.
